# EUROPÄISCHE PATENTSCHRIFT

(11) **EP 0 763 185 B1**
(45) Veröffentlichungstag und Bekanntmachung des Hinweises auf die Patenterteilung: **22.11.2000**
(21) Anmeldenummer: 95919309.5
(22) Anmeldetag: 10.05.1995
(51) Int. Cl.: G01C 11/00

(54) **VERFAHREN ZUR ERFASSUNG, AUSWERTUNG, AUSMESSUNG UND SPEICHERUNG VON GEO-INFORMATIONEN**
METHOD FOR THE COLLECTION, ANALYSIS, MEASUREMENT AND STORAGE OF GEOGRAPHICAL DATA
PROCEDE POUR LA COLLECTE, L'ANALYSE, LA MESURE ET LA MEMORISATION D'INFORMATIONS GEOGRAPHIQUES

(30) Priorität: 03.06.1994 DE 4419359
(43) Veröffentlichungstag der Anmeldung: 19.03.1997
(73) Patentinhaber: Kirchner, Wolfram, 31188 Holle (DE)
(72) Erfinder: Kirchner, Wolfram, 31188 Holle (DE)
(74) Vertreter: Haussingen, Peter
(86) Internationale Anmeldenummer: DE9500639
(87) Internationale Veröffentlichungsnummer: WO9533973

(56) Entgegenhaltungen:
- EP-A- 0 237 601
- EP-A- 0 379 198
- EP-A- 0 408 179
- EP-A- 0 424 875
- EP-A- 0 545 636
- WO-A-90/00719
- DE-A- 3 219 032
- DE-A- 3 612 674
- DE-A- 4 301 875
- ICL TECHNICAL JOURNAL, Bd. 6, Nr. 3, Mai 1989 OXFORD,GB, Seiten 542-556, XP 000118152 J.M.P.QUINN '..towards a Geographic Information System'
- PHOTOGRAMMETRIC ENGINEERING AND REMOTE SENSING, vol. 51, no. 4, April 1985; Seiten 445 bis 454; O.O. Ayeni: "Photogrammetry as a Tool for National Development"
- B.F. Kavanagh & S.J. Glenn Bird: "Surveying, Principles and Applications"; 1984, Reston Publishing Company, USA; Seiten 467 bis 471
- GIS Zeitschrift 4/1993, J. Höhle: "Height Models and Digital Orthophotos in GIS"; Seiten 17 bis 22

## Beschreibung

Die Erfindung betrifft ein Verfahren zur Erfassung, Auswertung, Ausmessung und Speicherung von Ceo-Informationen und ist für vielfältige raumordnende Maßnahmen von Planungs- und Entscheidungsinstitutionen des Staates, öffentlich-rechtlichen Planungsgesellschaften, privaten Planern, Architekten und Ingenieuren bestimmt. Damit sind u. a. angesprochen die Städteplanung, die Flurneuordnung, das Katasterwesen vorwiegend im ländlichen Raum, die Planung von Infrastrukturmaßnahmen des Verkehrswesens (Straße, Schiene, Wasserwege, das Kataster, die Regionalplanung, Agrarplanung, Forstwirtschaft und der Umweltschutz).

Die derzeitige Technologie bei der Bewältigung vermessungstechnischer Aufgaben stützt sich auf die weitreichende Entwicklung im Bereich der Rasterbildverarbeitung, der CAD und der Rastergraphik-Integration auch mit zugehörigen alphanumerischen Informationen (Attributen) in sogenannten Geo-Informationssystemen. Analoge Bilder lassen sich hochaufgelöst digitalisieren. Zur Verarbeitung der dabei entstehenden großen Datenmenge steht eine entsprechende Rechentechnik zur Verfügung.

Nach der Druckschrift DE A 32 19 032 ist eine Lösung bekannt, nach der die Gewinnung der Orientierungsdaten einer ein Gelände überfliegenden Kamera sowie eines digitalen Gelände-Höhen-Modells beabsichtigt ist. Es werden drei quer oder schräg zur Flugrichtung angeordnete Scnsorzeilen und eine zugeordnete Optik verwendet. Durch fortlaufende zeilenweise Abtastung werden drei, jeweils aus unterschiedlicher Perspektive aufgenommene Bildstreifen des Geländes erzeugt. Hierzu wird vorgeschlagen, vorzugsweise im mittleren Bildstreifen maschenförmig verteilte Bildpunkte vorzugeben, durch Flächenkorrelation in den beiden anderen Bildstreifen die entsprechenden Bildpunkte sowie die zugeordneten Zeilen-Nummern zu bestimmen, aufgrund der annähernd bekannten Flugbewegungen für jeden Punkt, die genäherten Orientierungsparameter der Kamera sowie durch räumlichen Vorwärtsschnitt die Geländekoordinaten des Punktes näherungweise zu bestimmen, Strahlenschnittbedingungen für die drei zu einem Punkt gehörenden Strahlen aufzustellen und über Fehlergleichungen und einen Ausgleichsprozeß die wahrscheinlichsten und endgültigen Werte der Orientierungsparameter und die Punkt-Geländekoordinaten zu ermitteln.

Weiterhin ist eine Lösung nach der Druckschrift EP A 0 237 601 bekannt, wonach die photogrammetrische Erfassung eines Objektes mit Hilfe eines optoelektronischen Festkörper-Flächensensors über einem großen Bildformat in Teilbildern erfolgt, wenn die Position des Sensors in der Bildebene mittels eines Réseaus bestimmt wird. Das kann durch Abbildung mindestens einer Réseaumasche im Sensorbild geschehen. Nach Messung des Réseaupunkte im Koordinatensystem des Teilbildes und Transformation auf die Sollwerte im System des Réseaus erhält man die Position des Flächensensors und Transformationsparameter für alle Bildpunkte innerhalb der Réseaumasche. Dazu muß die Näherungsposition des Sensors hinreichend genau bekannt sein, um die Nummer der Réseaumasche als eindeutige Identifizierung der Réseaupunkte bestimmen zu können.

Nach der Druckschrift DE A 38 02 541 ist bekannt, daß bei ersten Bildflügen in einer Flughöhe zwischen etwa 150 m bis 500 m über dem Boden mit Erkundungskammern (2) in Kombination mit Telekammern (3) zur Erstellung von Detailaufnahmen aus dem durch die Erkundungskammern (2) abgedeckten Bereichsausschnitt aufgenommenen Reihenmeßluftbildern erfaßt wird. Die Reihenmeßluftbilder werden mittels Orientierungshilfen hinsichtlich ihrer Lage im Naturraum festgelegt und unter Anwendung photogrammetrischer Methoden ausgewertet. Die ermittelten Naturraumdaten einer Struktur werden den Koordinaten der Struktur im Naturraum selektiv abrufbar zugeordnet.

Nach der Druckschrift DE A 38 30 577 erfolgt die Bildung der Objektpixelsignale durch eine digitale Steuerung der Abtastperiode Δty der à priori analogen, parallelen Detektorsignale und deren Speicherung in (M) Speichern, aus denen durch serielles Auslesen ein analoges Zeilensignal s(t) gebildet wird, das in (n) konstanten Perioden Atx abgetastet und daraus die endgültigen, den Objektpixeln (B) entsprechenden Signale gebildet werden, wobei die Abtastperioden Δty und Δtx jeweils Funktionen der Abtastentfernung (E) bzw. der Flughöhe (h) und des Abtastwinkels (w) darstellen.

Die Druckschrift DD 237 211 betrifft eine Schaltungsanordnung zum automatischen Betrieb einer photogrammetrischen Aufnahmeeinrichtung. Sie kann zur Herstellung von Luftbildreihenaufnahmen Anwendung finden und soll helfen, Mängel, die bei der manuellen Bedienung der Aufnahmeeinrichtung entstehen können, auszuschließen sowie die Belastung des Bedienpersonals auf ein Minimum zu reduzieren. Die zur Steuerung der photogrammetrischen Aufnahmeeinrichtungen notwendigen Größen wie Geschwindigkeits-Höhe-Verhältnis, Abdrift sowie Belichtungszeit werden durch geeignete Korrelationsbestimmungen ermittelt. Zwei senkrecht zur Flugrichtung angeordnete diskrete Fotoempfängerzeilen, die in einem bestimmten Zeitraster abgefragt werden, liefern entsprechend dem überflogenen Gelände relevante Informationen für die Bildung der Steuergrößen.

Ein Verfahren zur Schwerkraftvermessung aus der Luft nach der Druckschrift DE A 36 12 674 beruht auf der Verwendung eines hinsichtlich Geschwindigkeit, Kurs und Höhe stabilisierten Luftfahrzeuges, das einen Schwerkraftmesser entsprechender Empfindlichkeit enthält. Dessen Signale sowie weitere Signale werden mit einer hohen Abtastratc auf Magnetband aufgezeichnet, so daß der Ort (die Position) des Luftfahrzeuges errechenbar ist usw., entweder auf der Basis eines Satellitenortungssystems oder eines erdgestützten, auf geodätisch genau bekannte Punkte bezogenen Navigationssystems, das mehrere Navigationsparameter wie Peilrichtungen oder Entfernungen liefert.
Nachteil ist, daß die vorgenannten bekannten Lösungen nicht als Summe in ihrer technischen und technologischen Koordination zur Erfassung, Auswertung, Ausmessung und Speicherung von Geo-Informationen bisher genutzt wurden, sondern von Fall zu Fall in der Art von Insellösungen vorliegen und somit bisher ein geschlossenes, allumfassendes System zur Erfassung, Auswertung, Ausmessung und Speicherung von Geo-Informationen nicht gegeben ist.

Nach der Druckschrift ICL Technical Journal, Bd. 6, Nr.: 3, Mai 1989, Oxford, Seiten 542 bis 556; J.M.P. Quinn: "... Towards a Geographie Information System", ist eine Lösung bekannt, nach der vorhandene Daten mit einer konventionellen Datenbanken verbunden werden, womit eine Verbindung der Sachdaten mit den räumlichen Daten erreicht wird, wobei die Genauigkeit nur der des als Grundlage des digitalen Datenbestandes benutzten Kartenmaßstabes entspricht und in den Karten zwangsläufig enthaltene, historisch entstandene Ungenauigkeiten mit übernommen werden.

Im Artikel "Heihgt Models and Digital Orthophotos in GIS" von J. Höhle in der Zeischrift GIS 4/1993 ist beschrieben, einem Endnutzer auf einer Rechenanlage digitale Orthophotos und ein dazu erstelltes digitales Höhenmodell eines vorgegebenen Gebiets zur Verfügung zu stellen. Die digitalen Orthophotos werden aus Luftbildaufnahmen gewonnen, die im Mikrometerbereich digitalisiert und anhand des zuvor berechneten digitalen Höhenmodells entzerrt werden. Der Nutzer kann diese Daten für raumordnende Massnahmen, beispielsweise zur günstigen Revision von Katasterkarfen verwenden. Er kann den Daten graphische Elemente, Vektorelemente und alphanumerische Elemente (Text) hinzufügen.

Um die oben genannten Nachteile des Standes der Technik zu beseitigen, ist es Aufgabe der Erfindung, ein Verfahren zur Erfassung, Auswertung, Ausmessung und Speicherung von Geo-Informationen zu entwickeln, daß das praxisorientierte Datenhandling und die vereinfachte Verfügbarkeit in großen, mittleren und kleinen Nutzerzentren garantiert und eine Optimierung bestehenden Komponenten in digitalen Stereoarbeitsstationen mit interaktiver Überlagerung, Einpassung und Fortführung digital erfaßter Landschafts-, Planungs-, Liegenschaftsdaten oder Katasterkarten sowie mit ergänzenden alphanumerischen Informationen zuläßt. Dem Ingenieur, Sachbearbeiter oder Operateur soll die Möglichkeit gegeben werden, den Planungsraum zweidimensional oder entsprechend der Gerätekonfiguration auch dreidimensional, d.h. räumlich, am Bildschirm zu betrachten. Er soll jedoch auch die digitalen Bildinformationen als Orthophotoprojektion aufrufen und mit digitalen Planungs- oder Kartendaten überlagern als auch auf lokale Gegebenheiten abstimmen können.

Erfindungsgemäß wird die Aufgabe nach dem in Patentanspruch 1 angegebenen Merkmale gelöst. Die Vorteile der Erfindung bestehen darin, daß eine extreme Kosten- und Zeitersparnis für die Erfassung, Auswertung, Ausmessung und Speicherung von Geo-Informationen gegeben ist und sind dadurch charakterisiert, daß die Geländearbeit überwiegend im Büro durchgeführt wird. Durch die Einbeziehung der satellitengestützten Geodäsie zur Paßpunktmessung (GPS, DGPS), durch den Einsatz einer flugzeuggestützten Datenaufnahme des Messungsgebietes mit Reihenmeßkammern hoher Präzision und durch die gerätetechnische Abstützung über Triangulationsverfahren der Aerophotogrammetrie (Anwendung satellitengestützter Aeronavigations-Verfahren) zeigen die erstellten Aufnahmen bezüglich der Lage des Projektionszentrums eine hohe Genauigkeit. Weiterhin werden mit diesem Verfahren gemeinsam digitale Bilddaten, graphische Daten und alphanumerische Daten verwaltet. Es sind Schnittstellen zu vielfältigen Datenbanken und -formaten vorhanden. Gleichzeitig besitzt die Lösung eine Schnittstelle zu den heute handelsüblichen GPS-Empfängern, die für Absteckungs- oder Messungszwecke benutzt werden können. Darüber hinaus kann bei Bedarf die Übertragung der Koordinaten zwischen GPS und Arbeitsstation per Telemetrie erfolgen. Ein weiterer Vorteil ist darin zu sehen, daß digital entzerrte Bilddaten neuesten Datums auf CD oder anderen Datenträgern geliefert werden können und dadurch flugzeuggestützte Datenaufnahmen, Aerotriangulation und Entzerrung seitens des Bearbeiters der CD überflüssig werden und eine Laufendhaltung seines bereits existierenden Datenbestandes möglich wird.
Das Scanner und Digitalisieren von vorhandenen Katasterkarten, die CAD-Konstruktion von Katasterlinien und die hybride Raster-, Vektorbearbeitung auf der Basis eines einheitlichen geodätischen Bezugssystems ist gegeben.

Je nach Arbeitsumfang kann die Gerätekonfiguration sukzessiv angepaßt werden bis hin zu großen leistungsfähigen Workstations. Das Verfahren sieht Schnittstellen zu den am Markt gängigen Plottern und Scannern vor.

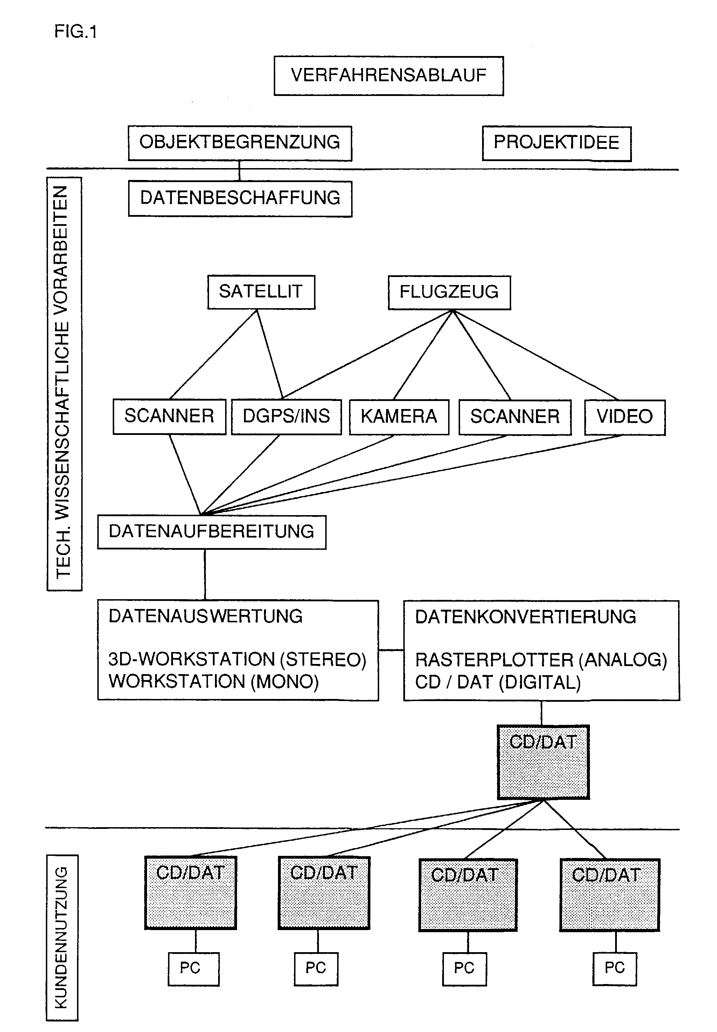

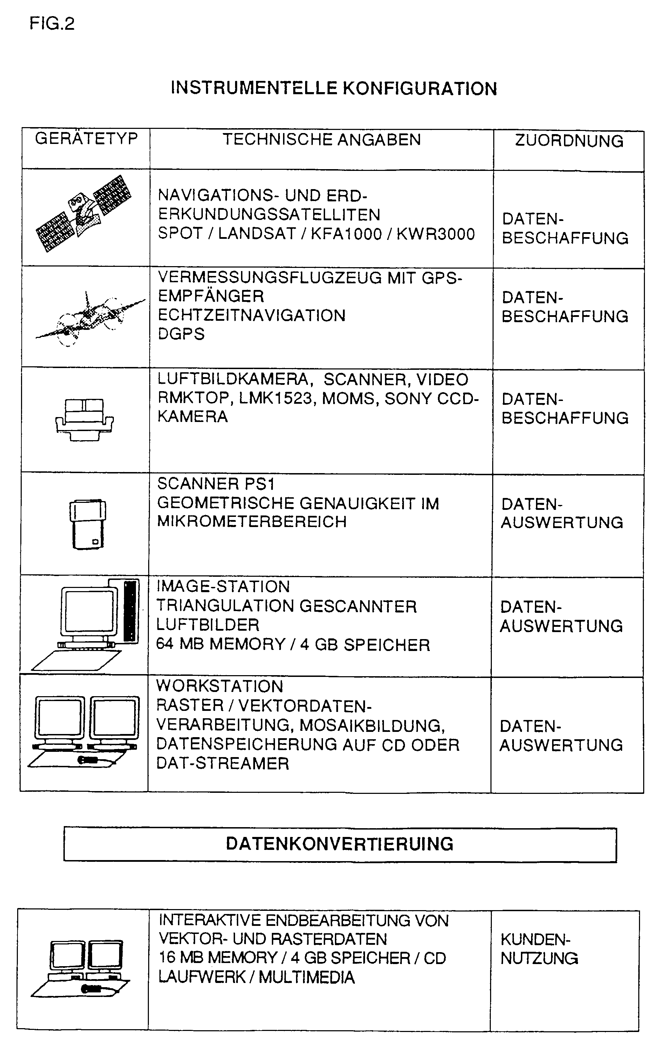

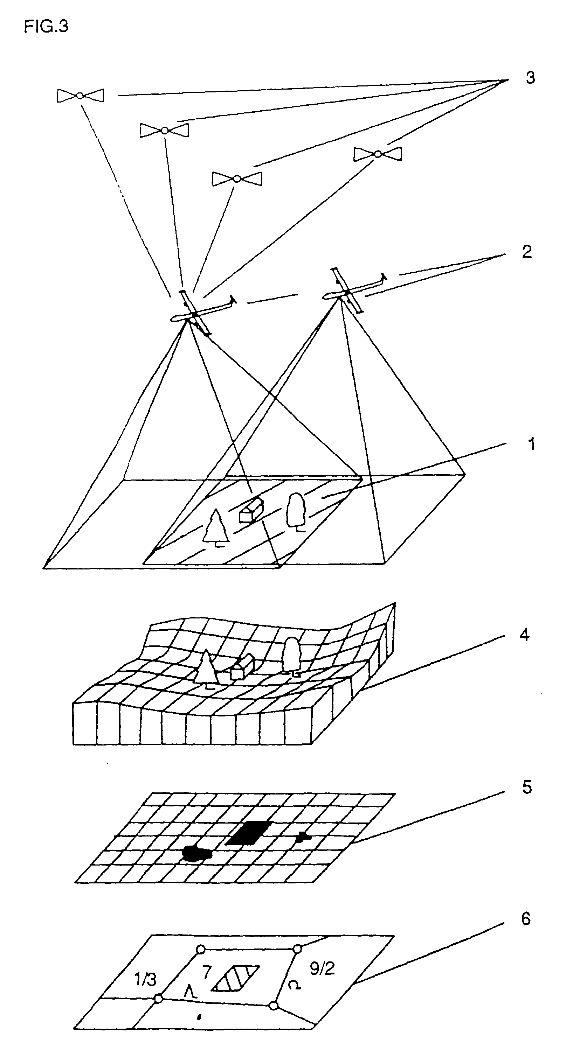

Die Erfindung wird anhand der
∗ Figur 1, die den Verfahrensablauf aufzeigt, der
∗ Figur 2, die die instrumentelle Konfiguration ausweist und der
∗ Figur 3, die das Verfahren schematisch erläutert,
dargestellt.

Das Ausführungsbeispiel beinhaltet ein topographisches Gebiet, daß nach dem Verfahren erfaßt, ausgewertet, ausgemessen und gespeichert wird.

Das nach Figur 1 und Figur 2 dargestellte Verfahren zur Erfassung, Auswertung, Ausmessung und Speicherung von Geo-Infomiationen umfaßt die Stufen Objektbegrenzung, Datenbeschaffung, Datenaufbereitung, Datenauswertung, Datenkonvertierung, wobei die Grundlagen des Verfahrens Luftbilder sowie Satellitenaufzeichnungen, geodätische Informationen und andere Planungsdaten, kurz, raumbezogenen Informationen sind, die in modernster Rechner- und Datenverarbeitungsgerätekonfiguration miteinander im Objekt raum verknüpft und bearbeitet werden. Für die hier in erster Linie angesprochenen Planungen und Nutzung eines Geographischen Informations-Systems sind folgende Verfahrensschritte erforderlich:
1. Geographische Begrenzung des aufzunehmenden und zu bearbeitenden Projektgebietes unter Benutzung vorhandener Karten, analoger, digitaler Informationen oder von Ortsbeschreibungen.
2. Beschaffen von geographischen oder kartesischen Koordinaten, soweit in nationalen oder übernationalen Netzen festgelegt. Für den Fall, daß derartige Informationen nicht vorliegen, sind entsprechende Netze unter Benutzung der Satellitengeodäsie mit Global Positioning Systems zu erstellen und ggf. durch Aerotriangulation zu verdichten.
3. Das Projektgebiet wird mit Hochleistungs-Präzisions-Reihenmeßkammern vom Flugzeug aus aufgenommen, wobei das erstellte Bildmaterial das Gebiet vollständig decken und die stereoskopische Betrachtungsmöglichkeit gesichert sein muß. Für eine geodätische Einbindung ggf. im Projektgebiet ausgewählter Paßpunkte ist zu sorgen.
4. Für den Fall, daß qualitativ brauchbare Satellitenbildaufzeichnungen vorliegen und der spätere Arbeitsmaßstab die Nutzung der Satellitenbilder ermöglicht, ist über Paßpunkte (x, y, z) die Geokodierung der Satellitenaufzeichnungen sicherzustellen.
5. Das Verfahren sieht die Nutzungsmöglichkeiten in einer inertialgestützten DGPS-Positionierung der Kamera während des Bildfluges vor, womit der Aufwand der unter 2, beschriebenen Leistungen reduziert werden kann.
6. Das Analogbildmaterial wird nach der Entwicklung hochauflösend gescannt und somit in digitale Informationen transformiert, und zwar mit einer Präzision im Submikrometerbereich mit einer der Aufgabenstellung angepaßten Auflösung.
7. Die Geokodierung der Satellitenaufzeichnungen bzw. die Aerotriangulation in Lage und Höhe (x, y, z) ermöglicht das Ausmessen jedes einzelnen Luftbildmodelles bzw. der Satellitenbilder. Dieser Vorgang ist eine wichtige Maßnahme zur Einbindung des Bildmaterials in die geodätischen bzw. geographischen Netze und damit Basis für die weitere qualitative Ausmessung und Interpretation.
8. Auf der Grundlage der nach Ziff. 6 geschaffenen Daten wird ein digitales Höhenmodell gemessen oder automatisch berechnet, welches wiederum die Voraussetzung für die differentielle Entzerrung der Luftbilder ist. Mit der Differentialentzerrung der digital vorliegenden Luftbildinformationen liegt jedes Pixel als Parallelprojektion vor und wird somit mit den anschließenden digitalen Bildwerten zu einem digitalen Orthophotoplan verknüpft.
9. Über den Verfahrensweg von 1 - 7 wird dem Datennutzer das Projektgebiet als digitales Modell im Meßlabor zur Verfügung gestellt. Er hat je nach Verwendung bestimmter Hard- und Software die Möglichkeit, das Gelände parallelprojektiv oder räumlich (plastisch) zu betrachten, darin zu messen und zu planen.
10. Die digitalen Geländeinformationen (s. Verfahrensweg 1 - 8) werden auf einem geeigneten Datenträger gespeichert, und zwar in einem dem Projektgebiet oder dem Planungsvorhaben gebotenen Umfang. Als Datenträger kommen geeignete Datenträger, wie CD's, in Betracht. Diese Daten werden potentiellen Nutzern, wenn es sich nicht um ein spezielles Projektgebiet handelt, in üblicher geographischer Zuordnung auf z. B. Landes-, Provinz-, Kreis- oder Gemeindeebene angeboten. Damit ist jedem Anwender dieser digitalen Daten, je nach Erfahrung, Einweisung oder auftragsbezogen, die Möglichkeit gegeben, interaktive Planungen vorzunehmen oder Dritte damit zu beauftragen. So ist eine konsequente Konstruktion von Flächen über Linien, Punkte, Messungszahlen und mathematische Werte möglich (z. B. Absteckungen). Darüber hinaus können zugleich durch Interpretation Nutzungsarten, Bauformen, ökologische Gegebenheiten, Anomalien u.a.m. erkannt und in den erstellten interaktiven Datenbestand eingearbeitet werden. Das Verfahren sieht in der weiteren Entwicklung auch die dreidimensionale Einbindung von Konstruktionen z. B. des Straßen- und Brückenbaues oder des Hochbaues vor.
11. Die interaktive Konstruktion oder Planung im Geländemodell am CAD- Arbeitsplatz schließt die Verwendung weiterer externer graphischer und nichtgraphischer Informationen mit ein. Dazu ist es erforderlich, die zuvor genannten planungsrelevanten Informationen im gleichen geodätischen oder geographischen Netz verfügbar zu haben, wie es für das Geländemodell verbindlich ist.
12. Auch die Informationen nach 11 können als Bestandteil des Verfahrens selbst angesehen werden, weil sie passend zum Verfahrensweg erstellt werden müssen oder zu beschaffen sind. Darüber hinaus kann im Geländemodell mit vorhandenen Messungsergebnissen von Feldaufnahmen, mathematisch berechneten Werten an der interaktiven Station gearbeitet werden. Voraussetzung für die Verknüpfung von Raster- und Vektorinformationen ist ein einheitliches geodätischen Bezugssystem.
13. Der gerätetechnische Teil der Datenbereitstellung sieht leistungsfähige Bildflugzeuge, ausgestattet mit hochauflösenden Reihenmeßkammern, GPS-Navigation, ggf. INS-DGPS-Navigation, vor und ermöglicht überdies zur Beschaffung geographischer Informationen auch und gerade den Rückgriff auf Satellitendaten oder flugzeuggestützte Sensorik. Für die Weiterverarbeitung sind Fotolaborarbeiten im üblichen Umfang und mit hoher Qualität zu berücksichtigen, wenn nicht die flugzeugestützte Datenaufnahme des Projektgebietes zu einem späteren Zeitpunkt bereits digital erfolgt. Für die hochauflösende Digitalisierung der panchromatischen Bildinformationen werden geeignete Scanner benutzt. Die Aerotriangulation oder sonstige geodätisch einwandfreie Paßpunktverdichtung und das Erstellen digitaler Höhenmodelle erfolgt unter Nutzung hochleistungsfähiger Bildverarbeitungsanlagen. Das Speichern des entzerrten digitalen Geländemodells erfolgt im unter Ziff. 9 erwähnten Raumbezug.
14. Gleichzeitig wird mit dem Verfahren unter Berücksichtigung industriell üblicher Austauschformate sichergestellt, daß die digitalen Bilddaten, Vektordaten und alphanumerische Informationen mit vielfältigen Datenbanken und Datenformaten kompatibel gehalten werden. Darüber hinaus ist vorgesehen, bei Bedarf die Übertragung der Daten oder Teilen davon auch über Telemetrie, E-mail, ISDN u.ä. gegen adäquate Gebühren zu realisieren.
15. Das Verfahren ist für eine auf einen potentiell vorhandenen Markt ausgerichtete wirtschaftliche Produktionsstrategie ausgerichtet, und kann ständig modifiziert und der fortschreitenden Technik angepaßt werden. Eine Basissoftware zur Visualisierung der Informationen ist beigestellt.

In Figur 3 wird das Verfahren schematisch in der Weise dargestellt, daß eine topographische Fläche (Gebiet) 1 durch Luftbildaufnahmen mittels Flugzeug 2, dessen Lage im Raum durch Satelliten 3 mit Hilfe deren Signale positioniert ist (DGPS), aufgenommen wird; anschließend das digitale Höhenmodell 4 nach dem 4. Verfahrensschritt als Datenauswertung abgeleitet oder gerechnet vorliegt, wird aus der topographischen Fläche (Gebiet) 1 und aus dem digitalen Höhenmodell 4 einschließlich der bekannten Lage der Projektionszentren im Raum zum Zeitpunkt der Aufnahme durch das Flugzeug 2 und mittels mathematischer Transformation vom analogen Luftbild oder von einer digitalen Luftbildszene das digitale Orthophoto 5 erstellt, das dem potentiellen Nutzer mittels Datenträger zur Verfügung gestellt wird, womit der potentielle Nutzer entsprechend seiner Aufgabenstellung und erforderlichen Entscheidungsfindung, die er als Auftraggeber formuliert hat, in die Lage versetzt wird, dem digitalen Orthophoto 5 eine Vektor-, Strichgraphik 6 hinzuzufügen und entsprechend nutzend auszuwerten.

### Verwendete Bezugszeichen

- 1: topographische Fläche (Gebiet)
- 2: Flugzeug
- 3: Satelliten
- 4: digitales Höhenmodell
- 5: digitales Orthophoto
- 6: Vektor-, Strichgraphik

## Patentansprüche

1. Verfahren zur Erfassung, Auswertung, Ausmessung und Speicherung von Geo-Informationen, für raumordnende Maßnahmen eines Nutzers auf der Basis von Orthophotos in ausreichend hoher Auflösung, welche in digitaler Form einem Rechner zur Verfügung stehen, der Rasterdaten mit Vektordaten und alphanumerischen Daten auf der Basis eines einheitlichen geodätischen Bezugssysteme korreliert, wobei in ersten Verfahrensschritten das hochpräzise digitale Orthophoto aus gescannten analogen Luftbildaufnahmen von Satelliten oder digitalen Luftbildszenen hochauflösender Reihenmeßkammeras eines Bildflugzeuges, dessen Lage mittels GPS-Navigation bestimmt ist, über Aerotriangulation und die Erstellung digitaler Höhenmodelle mittels hochleistungsfähiger Bildverarbeitungsanlagen berechnet und gespeichert wird, diese zuvor berechneten hochpräzisen digitalen Orthophotos entsprechend der vom Nutzer vorgegebenen Objektbegrenzung als Geo-Information in ein industrieübliches Austauschformat für Rasterdaten aufbereitet, gespeichert und auf üblichen digitalen Datenträgern vervielfältigt werden und wobei der Nutzer in zweiten Verfahrensschritten mittels dieser zuvor aufbereiteten und bereitgestellten digitalen Geo-Informationen räumlich plastischen Messungen interaktiv direkt am Rechner vornimmt sowie mittels CAD anhand dieser räumlich plastischen Messungen Katasterlinien konstruiert und zum Katasteraufbau verwendet und die Übertragung von Koordinaten zwischen GPS-Empfängern im Gelande und dem Rechner per Telemetrie erfolgen kann.

2. Verfahren zur Erfassung, Auswertung, Ausmessung und Speicherung von Geo-Informationen nach Anspruch 1, bei dem das hochpräzise digitale Orthophoto dem Endnutzer auf einer CD zur Verfügung steht.

3. Verfahren zur Erfassung, Auswertung, Ausmessung und Speicherung von Geo-Informationen nach Anspruch 1, bei dem das hochpräzise digitale Orthophoto und Teile davon dem Endnutzer auf Abruf über Datennetze zur Verfügung steht.

4. Verfahren zur Erfassung, Auswertung, Ausmessung und Speicherung von Geo-Informationen nach einem der Ansprüche 1 bis 3, bei dem das hochpräzise digitale Orthophoto durch Laufendhaltung den bereits existierenden Datenbestand des Endnutzers aktuell hält.

5. Verfahren zur Erfassung, Auswertung, Ausmessung und Speicherung von Geo-Informationen nach einem der Ansprüche 1 bis 4, bei dem das hochpräzise digitale Orthophoto in üblichen und gewünschten geographischen Zuordnungen zur Verfügung steht.

6. Verfahren zur Erfassung, Auswertung, Ausmessung und Speicherung von Geo-Informationen nach einem der Ansprüche 1 bis 5, bei dem dem hochpräzisen digitalen Orthophoto zusätzlich das digitale Höhenmodell zugeordnet ist und dem Endnutzer zur Verfügung steht.

7. Verfahren zur Erfassung, Auswertung, Ausmessung und Speicherung von Geo-Informationen nach einem der Ansprüche 1 bis 6, bei dem aus dem hochpräzisen digitalen Orthophoto in Verbindung mit dem digitalen Höhenmodell Daten berechnet sind, die es dem Nutzer ermöglichen, das digital zur Verfügung gestellte Gelände mit bestimmter Hard- und Software räumlich zu betrachten.

## Claims

1. Process for the collation, evaluation, measurement and storage of geo-information, for a user to take measures in regional development on the basis of orthophotos of sufficiently high definition, these photos being made available, in digital form, to a computer, which correlates raster data with vector data and alphanumeric data on the basis of a unitary geodetic reference system, wherein, in first procedure steps, the highly precise digital orthophoto from scanned analogue aerial photographs from satellites or digital aerial pictures from high-definition aerial survey cameras of an aerial survey aircraft, the position of which is established by GPS navigation, is evaluated using aerotriangulation and the creation of digital 3-D models using high-performance picture processing systems and stored, these previously calculated highly precise digital orthophotos are processed, in a manner corresponding to the object delimitation determined by the user, as geo-information in a format which is standard in industry, stored, and copied a number of times on standard digital data carriers, and wherein the user, in second process steps, using this previously processed and available geo-information, spatial, plastic measurements, produces spatial, plastic measurements interactively directly on the computer, and, by means of CAD, uses these spatial, plastic measurements to construct cadastral lines and for building up cadastral plans and the transmission of coordinates between GPS receivers in the field and the computer can be performed using telemetry.

2. Process for the collation, evaluation, measurement and storage of geo-information according to Claim 1, in which the highly precise digital orthophoto is available to the end user on a CD.

3. Process for the collation, evaluation, measurement and storage of geo-information according to Claim 1, in which the highly precise digital orthophoto and parts thereof are available to the end user when called up via data networks.

4. Process for the collation, evaluation, measurement and storage of geo-information according to one of Claims 1 to 3, in which the highly precise digital orthophoto keeps the end user's existing database current by means of continuous updating.

5. Process for the collation, evaluation, measurement and storage of geo-information according to one of Claims 1 to 4, in which the highly precise digital orhtophoto is available in standard and desired geographical arrangements.

6. Process for the collation, evaluation, measurement and storage of geo-information according to one of Claims 1 to 5, in which the digital 3-D model is additionally allocated to the highly precise digital orthophoto and made available to the end user.

7. Process for the collation, evaluation, measurement and storage of geo-information according to one of Claims 1 to 6, in which data are calculated from the highly precise digital orthophoto together with the digital3-D model, which data make it possible for the user to view the digitally produced landscape spatially using certain hardware and software.

## Revendications

1. Procédé destiné à la saisie, l'exploitation, le mesurage et l'exploitation d'informations géographiques en vue de mesures d'aménagement du territoire prises par un utilisateur sur la base d'orthophotos à résolution assez élevée dont un ordinateur dispose sous forme numérique, ordinateur mettant en corrélation des données de trame avec des données vectorielles et des données alphanumériques sur la base d'un système de référence géodésique uniforme, l'orthophoto numérique de haute précision étant calculée et mémorisée, au cours des premières étapes du procédé, par l'intermédiaire de l'aérotriangulation et de l'établissement de modèles numériques en trois dimensions au moyen d'installations de traitement d'image très performantes à partir de prises de vue aériennes analogiques scannées de satellites ou à partir de scènes aériennes numériques de caméras de prises de vue aériennes à haute définition d'un avion pour la photogrammétrie aérienne dont la position est déterminée au moyen de la navigation GPS, ces orthophotos numériques de haute précision calculées préalablement étant mises en forme en tant qu'information géodésique en format standard pour données de trame usuel dans l'industrie en fonction de la localisation de l'objet prédonnée par l'utilisateur, celles-ci étant mémorisées et reproduites sur des supports de données numériques usuels et l'utilisateur procédant, au cours des deuxièmes étapes de procédé, à des mesures en trois dimensions de façon interactive directement dans l'ordinateur au moyen de ces informations géodésiques numériques disponibles préalablement mises en forme et construisant des lignes cadastrales au moyen de la CAO à l'aide de ces mesures en trois dimensions et les utilisant pour établir un cadastre, et la transmission de coordonnées entre les récepteurs GPS sur le terrain et l'ordinateur pouvant être effectuée par télémétrie.

2. Procédé destiné à la saisie, l'exploitation, le mesurage et la mémorisation d'informations géodésiques selon la revendication 1, pour lequel l'utilisateur final dispose de l'orthophoto numérique de haute précision sur CD.

3. Procédé destiné à la saisie, l'exploitation, le mesurage et la mémorisation d'informations géodésiques selon la revendication 1, pour lequel l'utilisateur final dispose de l'orthophoto numérique de haute précision et d'éléments de celle-ci en les appelant par l'intermédiaire de réseaux de données.

4. Procédé destiné à la saisie, l'exploitation, le mesurage et la mémorisation d'informations géodésiques selon l'une des revendications 1 à 3, pour lequel l'orthophoto numérique de haute précision actualise constamment le stock de données déjà existant de l'utilisateur final.

5. Procédé destiné à la saisie, l'exploitation, le mesurage et la mémorisation d'informations géodésiques selon l'une des revendications 1 à 4, pour lequel l'orthophoto numérique de haute précision est disponible dans les affectations géographiques désirées usuelles.

6. Procédé destiné à la saisie, l'exploitation, le mesurage et la mémorisation d'informations géodésiques selon l'une des revendications 1 à 5, pour lequel le modèle numérique en trois dimensions est en plus associé à l'orthophoto numérique de haute précision et est disponible pour l'utilisateur final.

7. Procédé destiné à la saisie, l'exploitation, le mesurage et la mémorisation d'informations géodésiques selon l'une des revendications 1 à 6, pour lequel des données permettant à l'utilisateur de visualiser dans l'espace le terrain disponible numériquement à l'aide d'un certain logiciel et d'un certain matériel sont calculées à partir de l'orthophoto numérique de haute précision en relation avec le modèle numérique en trois dimensions.
